# EUROPEAN PATENT APPLICATION

(11) **EP 4 733 659 A1**
(43) Date of publication of application: **29.04.2026**
(21) Application number: 24831117.7
(22) Date of filing: 26.06.2024
(51) Int. Cl.: F17D 5/06, G01F 15/00, G01M 3/28, F16K 37/00

(54) **SYSTEM FOR CONTROLLING WATER, GAS, LIGHT AND TEMPERATURE IN LIVING SPACES AND PREMISES**

(30) Priority: 26.06.2023 ES 202330527
(71) Applicant: Abad Clarimon, Juán Luis, 08172 Sant Cugat Valles Barcelona (ES)
(72) Inventor: Abad Clarimon, Juán Luis, 08172 Sant Cugat Valles Barcelona (ES)
(74) Representative: Santarelli
(86) International application number: PCT/ES2024/070400
(87) International publication number: WO 2025/003544

(57) **Abstract**

Water, gas, electricity and temperature control system in living spaces and premises consisting of the following elements: A box (1) of non-electrically conductive material, polyhedral in shape, the interior of which is divided into two parts (3 and 4) separated by a wall (5) of the same material.

## Description

### OBJECT OF THE INVENTION

The purpose of this invention is to control the supplies of water, gas, electricity and temperatures inside homes and commercial premises or industrial buildings, avoiding unnecessary leaks not only of water, but also of gas, electricity and interior temperature. This control system is governed by a computerized unit that analyzes consumption at all times, even using artificial intelligence, and warns the user of possible incidents, the most important being leaks, through an app installed on their mobile phone. It also helps to re-educate users in the use of supplies. Artificial intelligence obtains information on the daily use of supplies and advises the user to optimise consumption and re-educate their use.

The patent ES 2 332 495 A1 entitled "Protection against leaks in water networks" and referring to the control and surveillance of water in the sanitary network for the detection of leaks or excess water consumption is known. All this by means of a plunger and a magnetic detector that act inside a box of non-conductive material of electricity with piping for connection to the network, which activates an electro shut-off valve in the event of water leaks. In relation to this previous patent, the current patent not only protects against water leaks, but also against gas, electricity and temperature leaks, so compared to the previous one it protects the whole house.

In the present invention, the fluid detection system, both water and gas, in addition to the plunger system, incorporates a detection system using the venturi effect that measures the pressure at the inlet of the flow, whether liquid or gas, and the narrowest point. When the fluid circulates, a pressure differential is generated that is detected by a load cell. The ventuty effect allows the detection of very small flow rates, which is a significant advantage over the system described above.

The closing mechanism for leaks or excess water and gas consumption is carried out by means of an electro valve.

These two systems, the plunger and the venturi effect, are used for the detection of the flow of both domestic water and gas and not only for the detection of water leaks as the previous system does. Each supply comprises both systems. These systems are installed at the supply inlet, both domestic water and gas.

As for the detection of electricity consumption, it is carried out by means of a voltmeter at the supply input.

Temperature control is carried out by means of an electronic thermometer.

The present invention refers to a safety mechanism to ensure that water, gas and electricity are not lost unnecessarily, measuring the regulation of the time of use, the temperature of the fluid, the regulation of the flow and the electricity consumption, and this mechanism can be programmed at will.

It is installed in the most convenient place on the network, inside or outside the home or premises. It is common for a cistern to break down that does not close the water outlet properly and is continuously consuming without being noticed. It is also common to leave a tap running after a power outage. Or leave the gas poorly closed or leave a light on. In these cases and others in which the flow, pressure or temperature of the water or gas or the electricity consumption varies from that programmed, the mechanism would act by shutting off the supply.

The user programs the mechanism for the time of greatest use, ideal temperature, flow or pressure necessary and the corresponding device closes the supply passage once this time has elapsed or in the event of any variation detected in the flow, pressure or temperature, avoiding losses and unwanted situations. After the device has cut off the water, gas or electricity supply, it can be put back into operation at the touch of a button, or by closing and opening again the water tap or gas outlet being used, or the electricity supply, thus analyzing whether the mechanism has been closed because the programmed time has passed, In this case, the timer will start counting down the time again, or if an abnormal loss or leak of water or gas or abnormal electricity consumption has caused the safety device to trip.

When the circulation of water or gas or electricity ceases, the electronic circuit resets the timer and other detectors, waiting for a new consumption time.

The mechanism proposed by the present invention is regulated by the user himself according to his consumption needs, and type of installation, industrial or domestic, with a heating circuit or only for cold water, to prevent frost, for pressurized water or with a certain flow, as well as gas or electricity.

It has its field of application in the industry of water and gas installations. electricity and temperature of inhabited interiors and particularly in the industry of leak detector security mechanisms.

Some models are known in this field of art that do not contribute to the state of the art the novel characteristics proposed by the present invention. Thus, the document ES 2 190 521 T3, proposes a leak locator based on hissing that produces a leak and the location of this based on high sensitivity microphones.

Also document 2 023 194, presents another leak detector based on the introduction into the pipes of a low-intensity radioactive element and that when blocked in the leak, can be detected by a radiation meter.

These documented models have the following drawbacks to the proposed invention: Their high cost, the need for special and expensive devices to carry out their task, the intervention of specialized personnel and doubtful effectiveness.

In view of these drawbacks described, the present invention provides the state of the art with novel, simple and easy-to-execute solutions that result in the following advantages:
- Very low cost, as they are built with conventional materials available on the market.
- Simplicity of use, it can be programmed easily by anyone without previous knowledge.
- No specialized personnel are necessary for its installation.
- Maintenance-free.
- Simplicity of manufacture, durability and great efficiency.
- It can replace the stopcock, which on many occasions, in the case of water or gas, due to its little use, and continuous contact with water or gas, form rust crusts, making it impossible to handle.

All these elements combined give rise to a final result in which significant differentiating characteristics are provided compared to the current state of the art.

Thus, the present invention is made up of the following elements: A box of non-electrically conductive material, polyhedral in shape, the interior of which is divided into two parts separated by a wall of the same material.

Viewed from the front and once installed, the box has a top and a bottom. A battery with a voltage output appropriate to the working voltage of the installed electronic circuit is housed at the top. This electronic circuit is made up of a timer, a microprocessor-assisted control stage and a power stage and the switches and potentiometers that command the mechanism. The bottom of the box is provided with holes for ventilation and to prevent possible condensation. On one side it houses a water inlet, consisting of a pipe with a thread, for connection to the network and inserted, inside, in a flow detector valve, through which the water enters the mechanism, giving a signal to the electronic circuit through a detector, which starts the timer. This detector valve consists of a plunger that slides inside a cylinder fitted with a screw to control a minimum of fluid flow when the mechanism remains idle. The cylinder has two lower and two upper perforations, sufficient for the passage of the required flow and which carries the water inside the casing.

The plunger is attached to a compression spring, which rests on a crosshead, with resistance calculated to offer a minimum load, actuating under the pressure of the water flow and closing completely when it is not required.

Inside the plunger is installed a magnetic field switch detector consisting of a circular magnet included inside the plunger and a proximity reed switch sensor housed in the housing of the detector valve so that when the plunger is displaced, it is activated, sending the signal to the electronic unit. The crosshead for the support of the spring has an appropriate section so as not to interfere with the flow of fluid in its path. Following the aforementioned detector valve and incorporated into the same pipe, there are installed, a flow meter,
a pressure detector and a temperature meter, for possible requirements of different water or fluid installations, all of them electrically connected to the control stage of the electronic circuit. Then a cut-off solenoid valve, electrically connected to the power stage of the electronic circuit and which by means of a thread links to the water outlet pipe to the outside.

The operation of the device begins when the fluid enters through the water inlet provided in the mechanism and enters the detector valve, passes through the flow, pressure and temperature detectors that communicate to the control stage the start of operation. The electronic circuit receives information from the
detectors and begins to discount the time programmed in the timer, closing the passage of the fluid by means of the solenoid valve when the timer reaches zero or the control stage discovers some variation in the rest of the detectors. When you open any tap in the installation, the mechanism is put back into operation, repeating the same cycle. When the electronic circuit detects an anomaly, it cuts off the flow, restoring it a few seconds later for a very short time and shutting it down again definitively until the user voluntarily starts up. If there is no response from any user, the circuit understands that it is really an anomalous flow and definitively cuts off the passage. The small amount of fluid that passes through the slack, through the cylinder screw or through the arrangement of the magnets in the housing ensures that the detector is not activated by a minor drip, or garden irrigation systems, which would cause uncomfortable operation. Once the spring begins its displacement, due to the pressure of the water, it passes through the lower holes of the plunger, continuing its way to the upper ones and from there to the solenoid valve, the last element of the mechanism and which gives way to the network to be protected.

This device has a Wi-Fi communication module for internet connection and thus transfer the information to software that is downloaded to a mobile terminal, an app or central server from which the supply control management is carried out.

A different embodiment incorporates instead of the battery a power supply equipped with a transformer with the appropriate voltage output and a rectifier.

A different construction incorporates in the outer area of the urn located at the entrance end of the tube, inside it, a turbine, moved by the pressure of the water entering the mechanism, connected to a direct current generator that in turn charges a battery that supplies current to the mechanism.

In a different embodiment, the current input is connected directly to the rectifier input, and the electronic circuit operates with the mains voltage.

Distinctly, the box incorporates a lid on which the circuit controls, the timer, the operating indicator lights and a display screen with the appropriate information are installed.

In a different embodiment, the mechanism incorporates at least a single detector.

In a different way, the dividing wall of the box is arranged parallel to the back, so that it has an anterior and a posterior department.

Indistinctly, it can incorporate at least one magnetic detector to have the option of letting more or less fluid pass through when the mechanism is inactive.

In a different realization, instead of an electro valve, it has another electric closing system of those existing on the market.

In a different way, the detector valve is provided with an adjustable orifice that directly communicates the entrance of the network with the cylinder, and allows the determined amount to pass through even when the plunger is closed.

In a different way, the device includes an acoustic alarm.

In a different way, the microprocessor is programmed to send an S.M.S. message to the user informing of the fault through a transmitter.

Alternatively, the mechanism has a low battery warning. Indistinctly, the electronic circuit has a transmitter compatible with the frequency of a remote control. In a different embodiment, the detector valve is replaced by another type of flow detector.

### BRIEF DESCRIPTION OF THE DRAWINGS

For a better understanding of this descriptive memory, drawings are attached that, as a non-limiting example, describe a preferred realization of the invention:

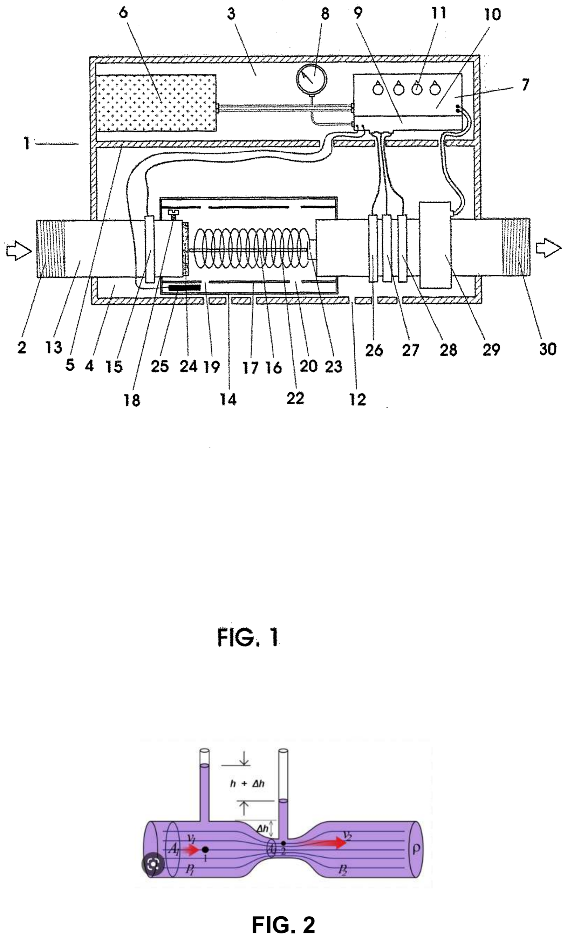

Figure 1.- Schematic of the mechanism
Figure 2.- Detectionsystem using the venturi effect that measures the pressure at the inlet of the flow, whether liquid or gas, and the narrowest point.

In these figures, the following numbered elements stand out;
1.- Box
2.- Inlet pipe thread
3.- Top
4.- Bottom
5.- Separating wall
6.- Battery
7.- Electronic circuit
8.- Timer
9.- Control stage
10.- Power Stage
11.- Controls
12.- Bottom perforations of the box
13.- Inlet piping
14.- Detector valve
15.- Valve flow detector
16.- Plunger
17.- Cylinder
18.- Screw
19.- Lower valve perforations
20.- Upper perforations of the valve
21.- Valve housing
22.- Dock
23.- Spring support crosshead
24.- Magnet
25.- Detector reed
26.- Flowmeter
27.- Pressure detector
28.- Temperature gauge
29.- Electro Shut-off valve
30.- Thread of the outlet pipe

### DESCRIPTION OF A PREFERENTIAL REALIZATION

A preferred embodiment of the proposed invention, including the numerical references in parentheses, is made up of the following elements: A box (1) of non-electrically conductive material, polyhedral in shape, the interior of which is divided into two parts (3 and 4) separated by a wall (5) of the same material. Viewed from the front and once installed, the box has a top (3) and a bottom (4). At the top (3) is a battery (6) with a voltage output appropriate to the working voltage of the installed electronic circuit (7). This electronic circuit (7) consists of a timer (8), a control stage (9) assisted by a microprocessor and another power stage (10) and the switches and potentiometers that command the mechanism (11). The lower part of the box (4) is provided with perforations (12) for ventilation and to prevent possible condensation. On one side it houses a water inlet, consisting of a pipe (13) with a thread (2), for connection to the network and inserted, inside, into a flow detector valve (14), through which the water enters the mechanism, giving a signal to the electronic circuit by means of a detector (15), which starts the timer (8). This detector valve (14) consists of a plunger (16) that slides inside a cylinder (17) fitted with a screw (18) to control a minimum of fluid flow when the mechanism remains inactive. The cylinder (17) has two lower perforations (19) and two upper perforations (20), sufficient for the passage of the required flow and which carries the water inside the casing (21).

The plunger (16) is attached to a compression spring (22), which rests on a crosshead (23), with resistance calculated to offer a minimum load, actuating under the pressure of the water flow and closing completely when it is not required.

Inside the plunger (16) is installed a magnetic field switch detector (24 and 25) consisting of a circular magnet (24) included inside the plunger and a proximity switch sensor (25) housed in the housing (21) of the detector valve (14) so that when the piston (16) is moved, it (25) is activated, sending the signal to the electronic unit (7). The crosshead (23) for the support of the spring (22), has an appropriate section so as not to interfere with the flow of fluid in its path. Following the aforementioned detector valve (14) and incorporated into the same pipe (13), a flow meter (26), a pressure detector (27) and a temperature meter (28) are installed, for possible requirements of different water or fluid installations, all of them electrically connected to the control stage (9) of the electronic circuit (7). Then a cut-off solenoid valve (29), electrically connected to the power amplifier (10) of the electronic circuit (7) and which by means of a thread (30) connects with the water outlet pipe to the outside.

## Claims

1. Water, gas, electricity and temperature control system in living spaces and premises consisting of the following elements: A box (1) of non-electrically conductive material, polyhedral in shape, the interior of which is divided into two parts (3 and 4) separated by a wall (5) of the same material. Viewed from the front and once installed, the box has a top (3) and a bottom (4). **Characterised by** the fact that a battery (6) is housed in the upper part (3) with a voltage output appropriate to the working voltage of the installed electronic circuit (7), this electronic circuit (7) being made up of a timer (8), a control stage (9) assisted by a microprocessor, another power stage (10), an acoustic alarm and the switches and potentiometers that control the mechanism (11), while the lower part of the box (4) is provided with perforations (12) and on one side houses a water inlet, consisting of a pipe (13) with a thread (2), and inserted inside the box (1) in a flow detector valve (14), and a detector that gives a signal to the electronic circuit, this detector valve (14) consists of a plunger (16) which slides inside a cylinder (17) fitted with a flow controller screw (18) and the cylinder (17) having two lower (19) and two upper (20) perforations,
The plunger (16) is attached to a compression spring (22), which rests on a crosshead (23), with strength calculated to offer a minimum load. Inside the plunger (16) is installed a magnetic field switch detector (24 and 25) consisting of a circular magnet (24) included inside the plunger and a proximity reed switch sensor (25) housed in the housing (21) of the detector valve (14). The crosshead (23) for the support of the spring (22), has an appropriate section so as not to interfere with the flow of the fluid in its path. Following the aforementioned detector valve (14) and incorporated into the same pipe (13), a flow meter (26), a pressure detector (27) and a temperature meter (28) are installed, all of which are electrically connected to the control stage (9) of the electronic circuit (7). This is followed by a cut-off solenoid valve (29), electrically connected to the power amplifier (10) of the electronic circuit (7), equipped with a threaded outlet pipe.

2. Water, gas, electricity and temperature control system in living spaces and premises according to claim 1, **whereby** instead of taking the electrical energy from a battery, it takes it directly from the mains through a power supply equipped with a rectifier.

3. A system for controlling water, gas, electricity and temperatures in living spaces and premises according to claims 1 and 2, **whereby** instead of a battery or power supply, the current input is connected directly to the mains, the electronic circuit operating with the mains voltage.

4. Water, gas, electricity and temperature control system in living spaces and premises according to claim 1, **whereby** the controls of the electronic circuit, the timer, the operating lights and a display screen are incorporated into a lid of the box (1).

5. Water, gas, electricity and temperature control system in living spaces and premises according to claim 1, **characterised by** the mechanism incorporating at least one detector.

6. Water, gas, electricity and temperature control system in living spaces and premises according to claim 1, **characterised by** the fact that the dividing wall (5) of the box (1) is arranged parallel to the back, so that it has an interior and an upper department.

7. Water, gas, electricity and temperature control system in living spaces and premises according to claim 1, **characterised by** the fact that it incorporates at least two network detectors.

8. Water, gas, electricity and temperature control system in living spaces and premises according to claim 1, **whereby** the detector valve is provided with an adjustable orifice that directly communicates the mains entrance with the cylinder.

9. Water, gas, electricity and temperature control system in living spaces and premises according to claim 1, **wherein** the microprocessor is programmed to send an S.M.S. message to the user through a transmitter.

10. Water, gas, electricity and temperature control system in living spaces and premises according to claim 1, **whereby** the detector valve (14) is replaced by another type of flow detector
